# EUROPÄISCHE PATENTSCHRIFT

(11) **EP 3 900 266 B1**
(45) Veröffentlichungstag und Bekanntmachung des Hinweises auf die Patenterteilung: **14.10.2026**
(21) Anmeldenummer: 19813802.6
(22) Anmeldetag: 02.12.2019
(51) Int. Cl.: H04L 67/12, H04L 67/59

(54) **VERFAHREN ZUM BETREIBEN EINES FAHRZEUGES BEIM AUSLAGERN VON RECHENLEISTUNG AUS DEM FAHRZEUG AN MINDESTENS EINEN EDGE-CLOUD-COMPUTER**
METHOD FOR OPERATING A VEHICLE WHEN TRANSFERRING PROCESSING POWER FROM THE VEHICLE TO AT LEAST ONE EDGE CLOUD COMPUTER
PROCÉDÉ POUR FAIRE FONCTIONNER UN VÉHICULE LORS DU TRANSFERT DE LA PUISSANCE DE CALCUL, DU VÉHICULE À AU MOINS UN ORDINATEUR FONCTIONNANT EN PÉRIPHÉRIE OU EN NUAGE

(30) Priorität: 20.12.2018 DE 102018009908
(43) Veröffentlichungstag der Anmeldung: 27.10.2021
(73) Patentinhaber: Volkswagen Aktiengesellschaft, 38440 Wolfsburg (DE)
(72) Erfinder: STRYGULEC, Sarah, 42105 Wuppertal (DE); NOWAK, Bianca, 44577 Castrop-Rauxel (DE)
(86) Internationale Anmeldenummer: PCT/EP2019/083291
(87) Internationale Veröffentlichungsnummer: WO 2020/126439

(56) Entgegenhaltungen:
- US-A1- 2012 089 684
- MENEGUETTE RODOLFO I ET AL: "Peer-to-Peer Protocol for Allocated Resources in Vehicular Cloud Based on V2V Communication", 2017 IEEE WIRELESS COMMUNICATIONS AND NETWORKING CONFERENCE (WCNC), IEEE, 19 March 2017 (2017-03-19), pages 1 - 6, XP033095647, DOI: 10.1109/WCNC.2017.7925602

## Beschreibung

Die Erfindung betrifft ein Verfahren zum Betreiben eines Fahrzeuges beim Auslagern von Rechenleistung aus dem Fahrzeug an mindestens einen Edge-Cloud-Computer nach dem unabhängigen Verfahrensanspruch, um bei Verbindungsunterbrechungen zu dem mindestens einen Edge-Cloud-Computer unerwartete Abbrüche von ausführbaren Anwendungen zu vermeiden, ein entsprechendes Steuergerät für ein Fahrzeug nach dem unabhängigen Vorrichtungsanspruch und ein Fahrzeug nach dem nebengeordneten unabhängigen Vorrichtungsanspruch.

Für eine sichere und qualitativ hochwertige Bereitstellung von Services und Features in Fahrzeugen wird zukünftig immer mehr neben der eigenen im Fahrzeug selbst befindlichen Hardware, wie Sensorik und Rechenressourcen der Steuergeräte, auf externe Hardware, wie z.B. auf Sensorik anderer Fahrzeuge und auf in der Umgebung des Fahrzeugs verfügbare externe Speicher- und Rechenressourcen zurückgegriffen, die über Edge-Cloud-Computer oder sog. Edge-Nodes zur Verfügung gestellt wird. Dies ist insbesondere im Bereich des automatischen Fahrens relevant. Hierbei besteht jedoch die Gefahr, dass die Verbindung zu einem Edge-Cloud-Computer unvorhergesehen abbricht und das Fahrzeug plötzlich nur noch die eigene Hardware zur Verfügung hat.

Allgemeine Schriften zum Stand der Technik bilden bspw. MENEGUETTE RODOLFO I ET AL: "Peer-to-Peer Protocol for Allocated Resources in Vehicular Cloud Based on V2V Communication", 2017 IEEE WIRELESS COMMUNICATIONS AND NETWORKING CONFERENCE (WCNC), IEEE, 19. März 2017 (2017-03-19), Seiten 1-6 und US 2012/089684 A1.

Die Aufgabe der Erfindung ist es daher, ein verbessertes Verfahren zum Betreiben eines Fahrzeuges beim Auslagern von Rechenleistung aus dem Fahrzeug an mindestens einen Edge-Cloud-Computer bereitzustellen, um bei Verbindungsunterbrechungen zu dem mindestens einen Edge-Cloud-Computer unerwartete Abbrüche von ausführbaren Anwendungen zu vermeiden. Insbesondere ist es Aufgabe der Erfindung, ein Verfahren zum Betreiben eines Fahrzeuges beim Auslagern von Rechenleistung aus dem Fahrzeug an mindestens einen Edge-Cloud-Computer zur Verfügung zu stellen, welches trotz Unterbrechungen zum Edge-Cloud-Computer einen sicheren Betrieb des Fahrzeuges ermöglicht, welches die wesentlichen, insbesondere sicherheitsrelevanten und/oder funktionsrelevanten, Anwendungen im Fahrzeug unterstützt und welches ein sicheres Notfall-Szenario vorsieht, wenn die Weiterfahrt des Fahrzeuges nicht mehr möglich ist. Ferner ist es Aufgabe der Erfindung, ein entsprechendes Steuergerät für ein Fahrzeug sowie ein entsprechendes Fahrzeug bereitzustellen.

Die erfindungsgemäße Aufgabe wird gelöst durch ein verbessertes Verfahren zum Betreiben eines Fahrzeuges beim Auslagern von Rechenleistung aus dem Fahrzeug an mindestens einen Edge-Cloud-Computer, um bei Verbindungsunterbrechungen zu dem mindestens einen Edge-Cloud-Computer unerwartete Abbrüche von ausführbaren Anwendungen zu vermeiden, mit den Merkmalen des unabhängigen Verfahrensanspruches, durch ein verbessertes Steuergerät für ein Fahrzeug mit den Merkmalen des unabhängigen Vorrichtungsanspruches und durch ein verbessertes Fahrzeug mit den Merkmalen des nebengeordneten unabhängigen Vorrichtungsanspruches. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung stellt ein Verfahren zum Betreiben eines Fahrzeuges, insbesondere eines autonom oder hochautomatisiert fahrenden Fahrzeuges, beim Auslagern von Rechenleistung aus dem Fahrzeug an mindestens einen Edge-Cloud-Computer (oder ggf. einen Cloud-Computer) bereit, um bei Verbindungsunterbrechungen zu dem mindestens einen Edge-Cloud-Computer (oder ggf. einem Cloud-Computer) unerwartete Abbrüche von ausführbaren Anwendungen zu vermeiden, wobei der Edge-Cloud-Computer (oder ggf. ein Cloud-Computer) dazu ausgeführt ist, eine externe Rechenleistung für extern ausführbare Anwendungen bereitzustellen, und wobei das Fahrzeug mindestens ein Steuergerät aufweist, welches dazu ausgeführt ist, eine interne Rechenleistung für intern ausführbare Anwendungen bereitzustellen, umfassend folgende Schritte:
1) Erfassen von extern ausführbaren Anwendungen,
2) Erfassen von intern ausführbaren Anwendungen,
3) Zuordnen einer Priorisierung jeder Anwendung von den extern ausführbaren Anwendungen und intern ausführbaren Anwendungen,
4) Zuordnen zumindest eines Teils der internen Rechenleistung auf dem mindestens einen Steuergerät für die extern ausführbaren Anwendungen und intern ausführbaren Anwendungen in Abhängigkeit von deren Priorisierung.

Unter einem Edge-Cloud-Computer im Sinne der Erfindung kann ein Rechenknoten eines Edge-Node-Netzwerkes verstanden werden, der über einen Prozessor mit einer Rechenleistung und eine Kommunikationseinheit zum Austauschen von Daten, bspw. mit einem anderen Edge-Cloud-Computer und/oder einem Endgerät, verfügt. Der Edge-Cloud-Computer kann zum Bereitstellen von Rechenleistung am Rande des Edge-Node-Netzwerkes dienen. Über die Kommunikationseinheit kann der Edge-Cloud-Computer Daten von einem Endgerät, wie z. B. einem Fahrzeug, empfangen, die er mit der eigenen Rechenleistung auf seinem Prozessor bearbeiten kann. Die Ergebnisse der Bearbeitung kann der Edge-Cloud-Computer über die Kommunikationseinheit zurück an das Fahrzeug senden. Bei den Daten kann es sich bspw. um Sensordaten handeln, die auf dem Edge-Cloud-Computer ausgewertet werden können. Auch ist es denkbar, dass der Edge-Cloud-Computer unterschiedliche Rechenaufgaben für unterschiedliche Systemanwendungen im Fahrzeug übernehmen kann.

Die Erfindung erkennt dabei, dass für den Zeitraum, in dem die Verbindung zu externen Ressourcen, wie z. B. Edge-Cloud-Computern und/oder Cloud-Computern, unterbrochen ist, die wesentlichen fahrzeugbezogenen Anwendungen wieder komplett vom Fahrzeug selbst übernommen werden müssen. Erfindungsgemäß wird eine Priorisierung sowohl der auf den internen Steuergeräten laufenden Anwendungen als auch der auf den externen Computern laufenden Anwendungen durchgeführt. Sicherheitsrelevante Anwendungen können dabei eine hohe Priorisierung erhalten. Die Anwendungen, die für eine eigenständige oder assistierte Weiterfahrt des Fahrzeuges relevant sein können, können eine mittlere Priorisierung erhalten oder in ihrer Priorisierung den Sicherheitsrelevanten Anwendungen untergeordnet sein. Die Anwendungen, die lediglich dem Wohlbefinden, wie z. B. einer Unterhaltung und/oder Beschäftigung eines Benutzers z.B. in Form von Entertainment Funktionen dienen, können wiederum eine niedrige Priorisierung erhalten. Auf Basis der Priorisierung können die von den fahrzeuginternen Steuergeräten bereitgestellten Ressourcen für die Überbrückungszeit, in der die Verbindung zu den externen Ressourcen, wie z. B. Edge-Cloud-Computern und/oder Cloud-Computern, unterbrochen ist, neu verteilt werden. Somit können weniger relevante Services, wie bspw. Streaming von Musik, zeitweise vernachlässigt werden, um stattdessen essentielle Services, wie z. B. Notbremsassistent oder dergleichen, intern ausführen zu können.

Die Priorisierung der Anwendungen dient dazu, eine Art Notfallplan zur Sicherstellung der sicherheitsrelevanten Anwendungen bei einem Verbindungsabbruch zu mindestens einer externen Rechenressource zu erstellen. Der Notfallplan kann vorteilhafterweise bereits während des Normalbetriebs des Fahrzeuges erstellt werden, um auf Verbindungsunterbrechungen vorbereitet sein zu können.

Zudem kann die Erfindung vorsehen, dass einige Anwendungen durch äquivalente und/oder alternative Anwendungen ersetzt werden können, wie z. B. Aussuchen einer Sensorart für eine Anwendung anstatt einer Fusion von Sensordaten für diese Anwendung zu nutzen oder Einparken mithilfe eines radarbasierten Abstandsensors anstatt mithilfe eines datenintensiven 3D-Bildes oder dergleichen, sodass die Anwendungen zumindest in ihren rudimentären Funktionen erfüllt werden.

Da in einem Fahrzeug mehrere Steuergeräte vorhanden sein können, die unterschiedliche Anwendungen ausführen können, kann ein Managementsystem vorgesehen sein, um bestimmten Steuergeräten bestimmten Anwendungen zuzuordnen.

Denkbar ist ferner, dass bei Verbindungsunterbrechungen zu dem mindestens einen Edge-Cloud-Computer dem Fahrer angeboten werden kann, einige Anwendungen, wie z. B. Lenken des Fahrzeuges, zu übernehmen, um eine Weiterfahrt des Fahrzeuges zu ermöglichen bzw. weitere interne Rechenressourcen für andere Anwendungen freizugeben.

Für den schlimmsten Fall, wenn die Weiterfahrt des Fahrzeuges nicht sichergestellt werden kann, kann ein Notfall-Szenario vorgesehen sein, um das Fahrzeug sicher anzuhalten, an einem sicheren Ort abzustellen und ggf. die Umgebung über z.B. akustische oder visuelle Signale zu informieren, dass es im Fahrzeug zum Ausfall einer Fahrfunktion gekommen ist bzw. kommen könnte.

Im Falle einer Verbindungsunterbrechung kann der Benutzer des Fahrzeuges informiert werden, dass ein Notfallplan und/oder ein Notfall-Szenario eingeleitet wird. Die Kommunikation mit dem Benutzer kann über visuelle und/oder akustische Signale erfolgen. Insbesondere kann dem Benutzer mitgeteilt werden, welche Anwendungen in einem Notfall nicht unterstützt werden können.

Vorteilhafterweise kann auf einem Display in einem Armaturenbrett oder auf einem Overheaddisplay eine Liste mit allen Anwendungen angezeigt werden, die entsprechend ihrer Priorisierung sortiert wurden. Die Anwendungen, die mithilfe der internen Rechenleistung weiter ausgeführt werden können, können dabei gesondert gekennzeichnet werden. Die Anwendungen, die nicht weiter ausgeführt werden können, können dabei mit einer Warnung versehen werden. Die Anwendungen, die dem Benutzer angeboten werden, manuell zu übernehmen, können bspw. mit einem Blinklicht gekennzeichnet werden. Mit anderen Worten kann dem Nutzer über eine Anzeigeeinheit eine Einsicht in eine Liste, die die Priorisierung der Anwendungen beispielsweise anhand ihrer Sortierung darstellt, ermöglicht werden. Dabei können die Anwendungen entsprechend ihrer Zuordnung extern/intern, anpassbare/fixe Priorisierung oder auch manuelle Übernahme möglich/nicht möglich gekennzeichnet werden. Zudem ist es denkbar, dass der Benutzer über eine Eingabemöglichkeit wie z.B. einen Touchscreen die Anwendungen markieren und/oder sortieren kann, die er präferieren und/oder übernehmen möchte.

Datenverluste, die durch den plötzlichen Wegfall der Kommunikationsverbindung zum Edge-Cloud-Computer auftreten, können durch Prädiktion der Daten oder durch Schätzungen ausgeglichen werden. Somit kann die Erfindung einen sicheren Betrieb des Fahrzeuges ermöglichen, wobei die wesentlichen, insbesondere sicherheitsrelevanten und/oder funktionsrelevanten, Anwendungen im Fahrzeug unterstützt werden, und wobei ein sicheres Notfall-Szenario vorbereitet wird, wenn die Weiterfahrt des Fahrzeuges nicht mehr möglich ist.

Ferner kann die Erfindung bei einem Verfahren zum Betreiben eines Fahrzeuges vorsehen, dass die extern ausführbaren Anwendungen und intern ausführbaren Anwendungen mindestens eine der folgenden Anwendungen umfassen:
- APP1-: Fahrassistenzfunktionen,
- APP2-: Fahrmodi gemäß einem von möglichen Automatisierungsgraden beim Betreiben des Fahrzeuges,
- APP3-: Auswertung von Sensordaten,
- APP4-: Fusion von Sensordaten,
- APP5-: Berechnung von Fahrmanövern,
- APP6-: hochautomatisiertes und/oder autonomes Fahren,
- APP7-: Navigation,
- APP8-: Informationsdienste,
- APP9-: Entertainment,
- APP10-: Streaming,
- APP11-: Updates,
- APP12-: On-Board-Diagnostik,
- APP13-: Telematik,
- APP14-: Voice-Control,
- APP15-: Gestenerkennung,
- APP16: Klimatisierung.

Im Rahmen der Erfindung ist es denkbar, dass einige Anwendungen sowohl intern auf dem Fahrzeug als auch extern auf dem Edge-Cloud-Computer ausgeführt werden können, wie z.B. Gestenerkennung, Fusion von Sensordaten oder dergleichen. Zudem ist es denkbar, dass einige Anwendungen spezifisch für das Fahrzeug, wie z. B. Fahrassistenzfunktionen, bspw. Antiblockiersystem, oder für den Edge-Cloud-Computer, wie z. B. Informationsdienste, bspw. Börseninteraktion oder Streamingdienste, sein können. Vorteilhafterweise werden im Rahmen der Erfindung alle Anwendungen ausgewertet. Somit können die Serviceleistungen innerhalb des Fahrzeuges auf eine vorteilhafte Weise verbessert und erweitert werden. Der Kundenkomfort kann dadurch erheblich erhöht werden.

Weiterhin kann die Erfindung bei einem Verfahren zum Betreiben eines Fahrzeuges vorsehen, dass die Fahrassistenzfunktionen mindestens eine der folgenden Anwendungen umfassen:
- APP1.1-: Antiblockiersystem,
- APP1.2--: Elektronisches Stabilitätsprogramm,
- APP1.3--: Abstandsregeltempomat,
- APP1.4--: Notbremsassistent,
- APP1.5--: Spurhalteassistent,
- APP1.6--: Spurwechselassistent,
- APP1.7--: Nachtsichtassistent.

Somit werden im Rahmen der Erfindung alle sicherheitsrelevanten und/oder funktionswesentlichen Anwendungen berücksichtigt.

Des Weiteren kann die Erfindung bei einem Verfahren zum Betreiben eines Fahrzeuges vorsehen, dass die extern ausführbaren Anwendungen und intern ausführbaren Anwendungen eine hohe Priorisierung erhalten, die für die Sicherheit des Fahrzeuges relevant sind, und/oder dass die extern ausführbaren Anwendungen und intern ausführbaren Anwendungen eine mittlere Priorisierung erhalten, die für die Weiterfahrt des Fahrzeuges relevant sind, und/oder dass die extern ausführbaren Anwendungen und intern ausführbaren Anwendungen eine geringe Priorisierung erhalten, die der dem Wohlbefinden, wie z. B. der Unterhaltung und/oder der Beschäftigung eines Benutzers dienen. Auf diese Weise wird in erster Linie die Sicherheit des Fahrzeuges, nachfolgend die Weiterfahrt des Fahrzeuges und abschließend das Wohlbefinden eines Benutzers sichergestellt. Denkbar ist dabei, dass für unterschiedliche Arten an Anwendungen verschiedene Kategorien geschaffen werden. Die bereits genannten Anwendungen ließen sich beispielweise folgendermaßen kategorisieren: Sicherheitsanwendungen, Fahranwendungen, Unterhaltungsanwendungen. Somit kann die Priorisierung der Anwendungen erleichtert werden.

Zudem kann die Erfindung bei einem Verfahren zum Betreiben eines Fahrzeuges vorsehen, dass die Anwendungen eine Priorisierung in der Reihenfolge von APP1 bis APP16 und/oder die Fahrassistenzfunktionen eine Priorisierung in der Reihenfolge von APP1.1 bis APP1.7 erhalten. Auf diese Weise kann die Priorisierung erleichtert, automatisiert und mit wenigen Rechenressourcen durchgeführt werden.

Außerdem sieht die Erfindung bei einem Verfahren zum Betreiben eines Fahrzeuges vor, dass im Schritt 4) die extern ausführbaren Anwendungen, die bei Verbindungsunterbrechungen zu dem mindestens einen Edge-Cloud-Computer plötzlich wegfallen, durch äquivalente und/oder alternative ausführbare Anwendungen auf dem mindestens einem Steuergerät ersetzt werden. Auf diese Weise kann ermöglicht werden, dass bevor die Anwendungen ganz unterbrochen werden zunächst deren rudimentäre Funktionalität sichergestellt werden kann. So kann bei einer Navigation auf eine gespeicherte Karte zurückgegriffen werden, anstatt eine aktuelle 3D-Karte erstellen zu müssen. Auch kann bei der Abstandsmessung auf Radar-Sensoren anstatt von Kameras zurückgegriffen werden, um Datenmengen, die verarbeitet werden müssen, zu reduzieren. Anstatt einer Video-Telefonie kann eine Voice-Telefonie angeboten werden. Vorübergehend kann auf Gestensteuerung und/oder Voice-Steuerung verzichtet werden und auf eine manuelle Bedienung von Instrumenten zurückgegriffen werden. Vorteilhafterweise kann der Benutzer vor dem Ersetzen der Anwendungen entsprechend informiert werden, um ein Ersetzen der Anwendungen unterbinden oder freigeben zu können.

Zudem ist es im Rahmen der Erfindung denkbar, dass im Schritt 4) Datenverluste durch Prädiktion und/oder Schätzung überbrückt werden. Somit können einige Anwendungen zwar mit reduzierter Genauigkeit oder Funktionalität, aber ohne Abbruch für einen Überbrückungszeitraum ausgeführt werden. Der Überbrückungszeitraum kann dazu dienen die externen Anwendungen auf die internen Ressourcen zu übertragen und/oder diese den Nutzer (wieder)aufnehmen zu lassen und/oder den Fahrer über das Wegfallen gewisser Funktionalitäten zu informieren, bevor es zum konkreten Funktionsabbruch kommt.

Außerdem kann die Erfindung bei einem Verfahren zum Betreiben eines Fahrzeuges vorsehen, dass im Falle einer Verbindungsunterbrechung zu dem mindestens einen Edge-Cloud-Computer einem Benutzer des Fahrzeuges angeboten wird, die extern ausführbaren Anwendungen, die bei der Verbindungsunterbrechung wegfallen und die durch den Benutzer manuell ausgeführt werden können, zu übernehmen. Auf diese Weise kann der Benutzer, bspw. bei der Lenkung des Fahrzeuges, eingebunden werden, um eine möglichst weite Palette an ausführbaren Anwendungen sicherstellen zu können.

Zudem kann die Erfindung bei einem Verfahren zum Betreiben eines Fahrzeuges vorsehen, dass im Schritt 4) die interne Rechenleistung auf dem mindestens einen Steuergerät für die extern ausführbaren Anwendungen und/oder intern ausführbaren Anwendungen, die von dem Benutzer nicht übernommen werden und/oder nicht übernommen werden können, der Priorisierung nach zugeordnet wird, solange die interne Rechenleistung ausreicht. Somit können die internen Rechenressourcen optimal ausgenutzt werden.

Ferner kann die Erfindung bei einem Verfahren zum Betreiben eines Fahrzeuges vorsehen, dass im Falle einer Verbindungsunterbrechung ein Notfall-Szenario ausgeführt wird, wenn eine Weiterfahrt mit dem Fahrzeug nicht möglich ist,
und/oder dass das Notfall-Szenario mindestens eine der folgenden Maßnahmen umfasst:
- Reduzieren einer Geschwindigkeit des Fahrzeuges,
- Ausscheren,
- Halten,
- Signalisierung eines Notfalls.

Auf diese Weise kann die Unfallgefahr und somit die Gefährdung der Insassen reduziert werden, selbst wenn die Fahrtüchtigkeit des Fahrzeuges beeinträchtigt ist.

Weiterhin kann die Erfindung bei einem Verfahren zum Betreiben eines Fahrzeuges vorsehen, dass die Verfahrensschritte 1) bis 4) prädiktiv und/oder zyklisch während des Normalbetriebs des Fahrzeuges ausgeführt werden, bei dem ein Auslagern von Rechenleistung aus dem Fahrzeug an mindestens einen Edge-Cloud-Computer möglich ist. Somit kann das erfindungsgemäße Verfahren vorausschauend auf unerwartete Abbrüche von Anwendungen vorbereitet sein.

Des Weiteren wird die erfindungsgemäße Aufgabe durch ein Steuergerät für ein Fahrzeug zum Ausgleichen von Verbindungsunterbrechungen beim Auslagern von Rechenleistung aus dem Fahrzeug an mindestens einen Edge-Cloud-Computer gelöst, wobei der Edge-Cloud-Computer dazu ausgeführt ist, eine externe Rechenleistung für extern ausführbare Anwendungen bereitzustellen, wobei das Steuergerät dazu ausgeführt ist, eine interne Rechenleistung für intern ausführbare Anwendungen bereitzustellen, und wobei das Steuergerät dazu ausgeführt ist:
1) Erfassen von extern ausführbaren Anwendungen,
2) Erfassen von intern ausführbaren Anwendungen,
3) Zuordnen einer Priorisierung jeder Anwendung von den extern ausführbaren Anwendungen und intern ausführbaren Anwendungen,
4) Zuordnen zumindest eines Teils der internen Rechenleistung auf dem mindestens einen Steuergerät für die extern ausführbaren Anwendungen und intern ausführbaren Anwendungen in Abhängigkeit von deren Priorisierung.

Mithilfe des erfindungsgemäßen Steuergeräts werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Außerdem kann das Steuergerät im Rahmen der Erfindung dazu ausgeführt sein, ein Verfahren auszuführen, welches wie oben beschrieben ablaufen kann.

Denkbar ist zudem, dass das Steuergerät in einer zentralen Steuereinheit des Fahrzeuges implementierbar oder als eine eigenständige Steuereinheit ausgebildet ist. Eine zentrale Steuereinheit kann in modernen Fahrzeugen bereits von Hause aus implementiert sein. Mithilfe einer eigenständigen Steuereinheit können sogar vorhandene Fahrzeuge mit der erfindungsgemäßen Funktionalität nachgerüstet werden.

Ferner kann die Erfindung vorsehen, dass das Steuergerät dazu ausgeführt ist, die extern ausführbaren Anwendungen, die bei Verbindungsunterbrechungen zu dem mindestens einen Edge-Cloud-Computer plötzlich wegfallen, durch äquivalente und/oder alternative ausführbare Anwendungen zu ersetzen. Auf diese Weise kann ermöglicht werden, dass zumindest eine rudimentäre Funktionalität von Anwendungen sichergestellt werden kann, die nicht im vollen Maße ausgeführt werden können.

Weiterhin kann die Erfindung vorsehen, dass eine Speichereinheit vorgesehen ist, in der eine dynamische Liste für die Priorisierung der extern ausführbaren Anwendungen und/oder intern ausführbaren Anwendungen hinterlegt ist. Somit kann jederzeit auf relevante Informationen zurückgegriffen werden, die bei der Zuordnung der internen Rechenleistung bei einer Verbindungsunterbrechung zum Edge-Node-Computer wichtig sind.

Des Weiteren kann die Erfindung bei einem Steuergerät eine Recheneinheit vorsehen, die dazu ausgeführt ist, die Liste prädiktiv und/oder zyklisch während des Normalbetriebs des Fahrzeuges zu aktualisieren, bei dem ein Auslagern von Rechenleistung aus dem Fahrzeug an mindestens einen Edge-Cloud-Computer möglich ist. Somit kann die Liste stets mit aktuellen Informationen belegt sein.

Zudem wird die erfindungsgemäße Aufgabe durch ein Fahrzeug mit mindestens einem Steuergerät gelöst, welches wie oben beschrieben ausgeführt werden kann. Mithilfe des erfindungsgemäßen Fahrzeuges können die gleichen Vorteile erreicht werden, die oben im Zusammenhang mit dem erfindungsgemäßen Verfahren und/oder mit dem erfindungsgemäßen Steuergerät beschrieben wurden. Auf diese Vorteile wird vorliegend vollumfänglich Bezug genommen.

Außerdem kann im Rahmen eines Fahrzeuges im Sinne der Erfindung ein Managementsystem vorgesehen sein, um dem mindestens einen Steuergerät und/oder einem weiteren Steuergerät des Fahrzeuges bestimmte Anwendungen zuzuordnen, die für das mindestens eine Steuergerät und/oder das weitere Steuergerät spezifisch sind oder die durch äquivalent und/oder alternativ ausführbare Anwendungen auf dem mindestens einem Steuergerät und/oder dem weiteren Steuergerät ersetzt werden können. Somit kann ein zentrales Managementsystem bereitgestellt werden, welches alle Anwendungen erfasst, priorisiert und entsprechend der Erfindung ansteuert.

Ferner kann im Rahmen eines Fahrzeuges im Sinne der Erfindung eine Anzeigeeinheit, bspw. in Form eines Displays, vorgesehen sein, um eine dynamische Liste für die Priorisierung der extern ausführbaren Anwendungen und/oder intern ausführbaren Anwendungen zu visualisieren und/oder die nicht sicherheitsrelevanten Anwendungen zu bearbeiten. Weiterhin ist es denkbar, dass die Anwendungen entsprechend ihrer Zuordnungen wie extern/intern, anpassbare/fixe Priorisierung oder auch manuelle Übernahme möglich/nicht möglich gekennzeichnet werden. Zudem ist es denkbar, dass die Anwendungen unterschiedlicher Priorisierung entsprechend markiert werden können. Außerdem ist es denkbar, dass die Anwendungen, die durch die interne Rechenleistung übernommen werden können, hervorgehoben werden können. Die Anwendungen, die durch die interne Rechenleistung nicht übernommen werden können, können mit einer Warnung versehen, bspw. farblich mit einer Warnfarbe, z. B. Rot, hinterlegt werden. Die Anwendungen, die dem Benutzer angeboten werden manuell zu übernehmen, können bspw. blinkend angezeigt werden. Zudem ist es denkbar, dass über eine Eingabemöglichkeit wie z.B. einen Touchscreen der Benutzer die Anwendungen markieren/sortieren kann, die er präferieren und/oder übernehmen möchte. Noch weiter ist es denkbar, dass der Benutzer die Anwendungen, zumindest aus Kategorien wie Fahranwendungen und Unterhaltungsanwendungen manuell sortieren kann. Die Sicherheitsanwendungen können wiederum eine nicht veränderliche hohe Priorisierung in der Liste erhalten.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigt:
- Fig. 1: eine schematische Darstellung eines Fahrzeuges beim Ausführen eines erfindungsgemäßen Verfahrens,
- Fig. 2: eine schematische Darstellung eines Armaturenbretts eines Fahrzeuges im Sinne der Erfindung und
- Fig. 3: eine schematische Darstellung einer Liste mit sortierten Anwendungen gemäß deren Priorisierung.

In den verschiedenen Figuren werden die gleichen technischen Merkmale mit denselben Bezugszeichen bezeichnet, wobei in der Regel ein technisches Merkmal nur einmal beschrieben wird.

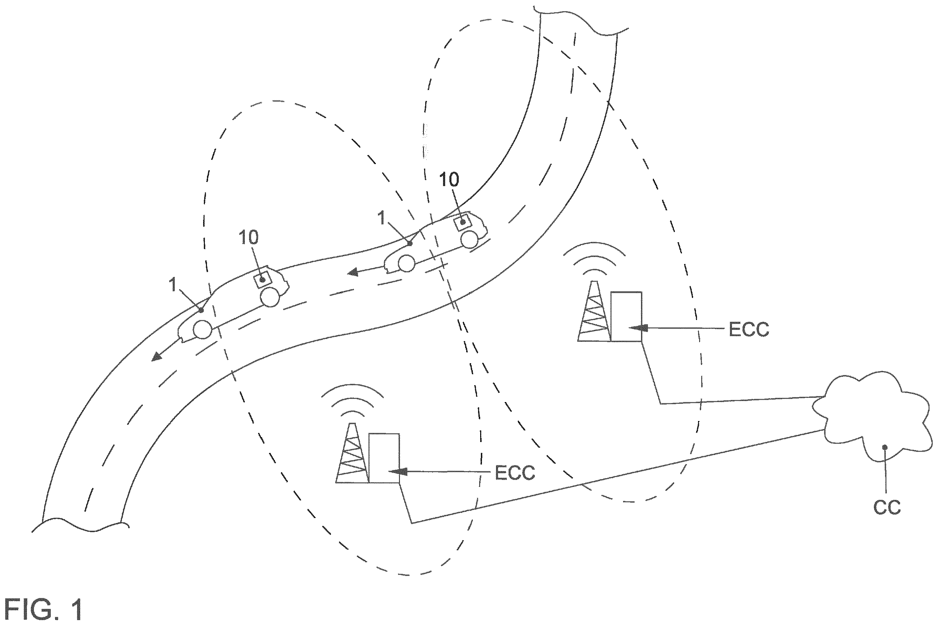

Die Figuren 1 bis 3 dienen zum Veranschaulichen des erfindungsgemäßen Verfahrens zum Betreiben eines Fahrzeuges 1, insbesondere eines autonom oder hochautomatisiert fahrenden Fahrzeuges 1, beim Auslagern von Rechenleistung aus dem Fahrzeug 1 an mindestens einen Edge-Cloud-Computer ECC und/oder einen Cloud-Computer CC, um bei Verbindungsunterbrechungen zu dem mindestens einen Edge-Cloud-Computer ECC und/oder einen Cloud-Computer CC unerwartete Abbrüche von ausführbaren Anwendungen zu vermeiden. Der Edge-Cloud-Computer ECC und/oder der Cloud-Computer CC sind/ist dazu ausgeführt, eine externe Rechenleistung R1 für extern ausführbare Anwendungen APP bereitzustellen. Das Fahrzeug 1 weist mindestens ein Steuergerät 10 auf, welches dazu ausgeführt ist, eine interne Rechenleistung R2 für intern ausführbare Anwendungen APP bereitzustellen.

Das erfindungsgemäße Verfahren umfasst folgende Schritte:
1) Erfassen von extern ausführbaren Anwendungen APP,
2) Erfassen von intern ausführbaren Anwendungen APP,
3) Zuordnen einer Priorisierung Prio jeder Anwendung APP von den extern ausführbaren Anwendungen APP und intern ausführbaren Anwendungen APP,
4) Zuordnen zumindest eines Teils der internen Rechenleistung R2 auf dem mindestens einen Steuergerät 10 für die extern ausführbaren Anwendungen APP und intern ausführbaren Anwendungen APP in Abhängigkeit von deren Priorisierung Prio.

In der Figur 1 sind zwei Fahrzeuge 1 gezeigt, die sich entlang einer Route bewegen und die während der Fahrt sich in einem Einzugsbereich eines von ggf. mehreren Edge-Cloud-Computern ECC und/oder Cloud-Computern CC befinden können. Kommt es nun zu einer Störung an einem Edge-Cloud-Computern ECC während sich das Fahrzeug 1 in dessen Einzugsbereich befindet, sodass die Verbindung zum Edge-Cloud-Netzwerk abbricht, müssen die wesentlichen Anwendungen APP im Fahrzeug 1 intern ausgeführt werden. Kann auf der Route erneut eine Verbindung zum Edge-Cloud-Netzwerk über einen anderen Edge-Cloud-Computer ECC aufgenommen werden, kann die Zeit ohne Verbindung durch Schätzungen überrückt und die Nutzung der Anwendungen gegebenenfalls aufrechterhalten werden. Ansonsten kann das Fahrzeug 1 bei ausreichenden internen Ressourcen mit einer reduzierten Auswahl an Anwendungen, entsprechend der Priorisierung, weiterfahren oder das Notfall-Szenario eingeleitet werden.

Erfindungsgemäß wird eine Priorisierung Prio sowohl der auf den internen Steuergeräten 10 laufenden Anwendungen APP als auch der auf den externen Computern ECC, CC laufenden Anwendungen APP durchgeführt. Sicherheitsrelevante Anwendungen APP können dabei eine hohe Priorisierung Prio erhalten. Die Anwendungen APP, die für eine Weiterfahrt des Fahrzeuges 1 relevant sein können, können eine mittlere Priorisierung Prio erhalten. Die Anwendungen APP, die lediglich einer Unterhaltung und/oder Beschäftigung, d. h. dem Wohlbefinden oder Komfort eines Benutzers dienen, können wiederum eine niedrige Priorisierung Prio erhalten oder gar vernachlässigt werden.

Auf Basis der Priorisierung Prio werden die internen Ressourcen für die Zeit, in der die Verbindung zu den externen Computern ECC, CC unterbrochen ist, innerhalb der durch Schätzungen zur Verfügung stehenden Überbrückungszeit neu verteilt werden.

Die Priorisierung Prio der Anwendungen APP dient dazu, eine Art Notfallplan zu erstellen. Der Notfallplan kann vorteilhafterweise bereits während des Normalbetriebs des Fahrzeuges 1 erstellt werden, um auf Verbindungsunterbrechungen im Voraus vorbereitet sein zu können.

Zudem kann die Erfindung vorsehen, dass einige Anwendungen APP durch äquivalente und/oder alternative Anwendungen APP ggfs. temporär ersetzt werden können, wie z. B. Aussuchen einer Sensorart für eine Anwendung APP anstatt einer Fusion von Sensordaten für diese Anwendung APP zu nutzen oder Einparken mithilfe eines radarbasierten Abstandsensors anstatt mithilfe eines datenintensiven 3D-Bildes usw. Somit können die Anwendungen APP zumindest in ihren rudimentären Funktionen erfüllt werden.

Da in einem Fahrzeug 1 mehrere Steuergeräte 10 vorhanden sein können, die unterschiedliche Anwendungen APP ausführen können, kann ein Managementsystem 2 vorgesehen sein, um bestimmten Steuergeräten 10 bestimmte Anwendungen APP zuzuordnen.

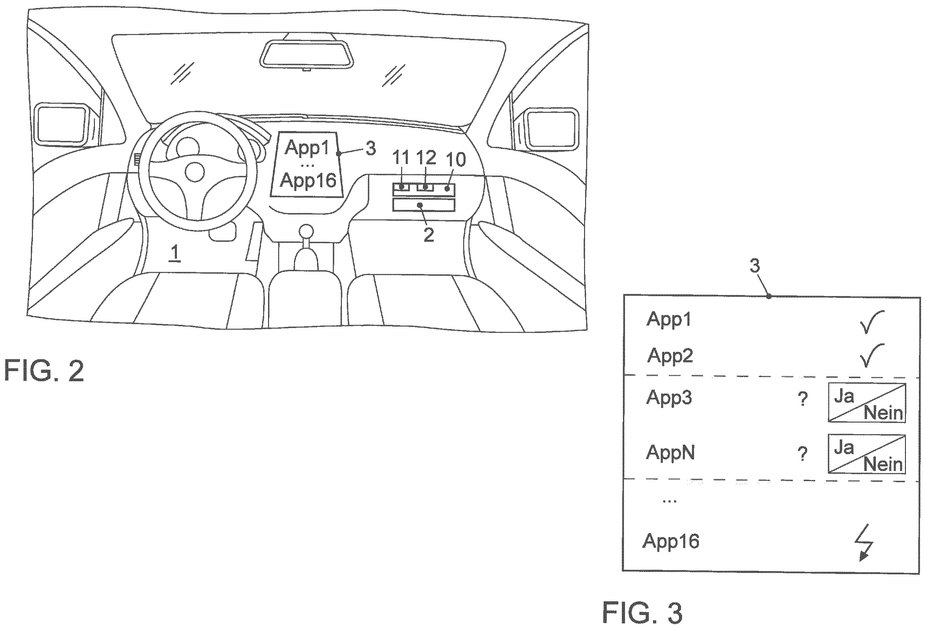

Denkbar ist ferner, dass bei Verbindungsunterbrechungen zu dem mindestens einen Edge-Cloud-Computer ECC und/oder einem Cloud-Computer CC dem Benutzer des Fahrzeuges 1 angeboten wird, bestimmte Anwendungen APP, wie z. B. Lenken des Fahrzeuges 1, manuell zu übernehmen, um eine Weiterfahrt des Fahrzeuges 1 zu ermöglichen und/oder weitere interne Ressourcen für andere Anwendungen freizugeben (siehe hierzu die Figur 3 und die Anwendungen APP, die bspw. mit einem Fragezeichen markiert sind).

Für den schlimmsten Fall, wenn die Weiterfahrt des Fahrzeuges 1 nicht sichergestellt werden kann, kann ein Notfall-Szenario vorgesehen sein, um das Fahrzeug 1 sicher anzuhalten, an einem sicheren Ort abzustellen und ggf. ein Notfallsignal abzusetzen. Das Notfall-Szenario kann mindestens eine der folgenden Maßnahmen umfassen:
- Reduzieren einer Geschwindigkeit des Fahrzeuges 1,
- Ausscheren,
- Halten,
- Signalisierung eines Notfalls.

Im Falle einer Verbindungsunterbrechung kann der Benutzer des Fahrzeuges 1 informiert werden, dass ein Notfallplan und/oder ein Notfall-Szenario eingeleitet wird. Hierzu kann eine Anzeigeeinheit 3, bspw. in Form eines Displays, vorzugsweise eines Touchdisplays, z. B. in einem Armaturenbrett oder auf einem Overheaddisplay, vorgesehen sein. Denkbar ist dabei, dass die Anzeigeeinheit 3 eine Liste mit allen Anwendungen APP visualisieren kann, die entsprechend ihrer Priorisierung Prio sortiert wurden (siehe die Figuren 2 und 3).

Die Anwendungen APP, die mithilfe der internen Rechenleistung R2 weiter ausgeführt werden können, können dabei gesondert gekennzeichnet werden (siehe hierzu die Figur 3 und die Anwendungen APP, die bspw. mit einem Hakenzeichen markiert sind).

Die Anwendungen APP, die nicht weiter ausgeführt werden können, können dabei mit einer Warnung versehen werden (siehe hierzu die Figur 3 und die Anwendungen APP, die bspw. mit einem Fragezeichen oder einem Blitzzeichen markiert sind).

Die Anwendungen APP, die manuell ausgeführt werden können, können dem Benutzer angeboten werden manuell zu übernehmen (siehe hierzu die Figur 3 und die Anwendungen APP, die bspw. mit einem Fragezeichen markiert sind). Neben diesen Anwendungen APP kann jeweils ein Eingabefeld vorgesehen sein, damit der Benutzer die Anwendungen APP markieren kann, die er übernehmen möchte.

Grundsätzlich ist es denkbar, dass der Benutzer die Anwendungen APP auf der Liste verschieben kann, um die automatische Sortierung im Sinne des erfindungsgemäßen Verfahrens gemäß den eigenen Wünschen anzupassen. Denkbar ist dabei, dass die Anwendungen APP aus Kategorien wie beispielsweise Fahranwendungen und Unterhaltungsanwendungen manuell sortieren werden können, wohingegen die Sicherheitsanwendungen nicht verschoben werden können, um deren hohe Priorisierung Prio zu schützen.

Als extern ausführbare Anwendungen APP und/oder intern ausführbare Anwendungen APP kommen folgende Anwendungen APP in Frage:
- APP1-: Fahrassistenzfunktionen,
- APP2-: Fahrmodi gemäß einem von möglichen Automatisierungsgraden beim Betreiben des Fahrzeuges,
- APP3-: Auswertung von Sensordaten,
- APP4-: Fusion von Sensordaten,
- APP5-: Berechnung von Fahrmanövern,
- APP6-: hochautomatisiertes und/oder autonomes Fahren,
- APP7-: Navigation,
- APP8-: Informationsdienste,
- APP9-: Entertainment,
- APP10-: Streaming,
- APP11-: Updates,
- APP12-: On-Board-Diagnostik,
- APP13-: Telematik,
- APP14-: Voice-Control,
- APP15-: Gestenerkennung,
- APP16: Klimatisierung.
Einige dieser Anwendungen APP können sowohl intern auf dem Fahrzeug 1 als auch extern auf dem Edge-Cloud-Computer ECC oder dem Cloud-Computer CC ausgeführt werden, wie z.B. Gestenerkennung, Fusion von Sensordaten oder dergleichen. Zudem ist es denkbar, dass einige Anwendungen APP spezifisch für das Fahrzeug 1, wie z. B. Fahrassistenzfunktionen, bspw. Antiblockiersystem, oder für den Edge-Cloud-Computer ECC, wie z. B. Informationsdienste, bspw. Börseninteraktion oder Streamingdienste, sein können.

Unter den Fahrassistenzfunktionen APP1 können sich folgende Anwendungen APP befinden:
- APP1.1-: Antiblockiersystem,
- APP1.2--: Elektronisches Stabilitätsprogramm,
- APP1.3--: Abstandsregeltempomat,
- APP1.4--: Notbremsassistent,
- APP1.5--: Spurhalteassistent,
- APP1.6--: Spurwechselassistent,
- APP1.7--: Nachtsichtassistent.

Im Rahmen der Erfindung ist es denkbar, dass die Anwendungen APP eine Priorisierung Prio in der Reihenfolge von APP1 bis APP16 und/oder die Fahrassistenzfunktionen APP1 eine Priorisierung Prio in der Reihenfolge von APP1.1 bis APP1.7 erhalten.

Die Verfahrensschritte 1) bis 4) können vorteilhafterweise prädiktiv und/oder zyklisch während des Normalbetriebs des Fahrzeuges 1 ausgeführt werden, um auf eventuelle Verbindungsunterbrechungen vorbereitet zu sein.

Das Steuergerät 10 im Sinne der Erfindung kann in einer zentralen Steuereinheit des Fahrzeuges 1 implementierbar oder als eine eigenständige Steuereinheit ausgebildet sein.

Das Steuergerät 10 kann weiterhin eine Speichereinheit 11 aufweisen, in der eine dynamische Liste für die Priorisierung Prio der extern ausführbaren Anwendungen APP und/oder intern ausführbaren Anwendungen APP hinterlegt ist.

Zudem kann das Steuergerät 10 eine Recheneinheit 12 aufweisen, die dazu ausgeführt ist, die Liste prädiktiv und/oder zyklisch während des Normalbetriebs des Fahrzeuges 1 zu aktualisieren.

Die voranstehende Beschreibung der Figuren beschreibt die vorliegende Erfindung ausschließlich im Rahmen von Beispielen.

### Bezugszeichenliste

- 1: Fahrzeug
- 2: Managementsystem
- 3: Anzeigeeinheit

- 10: Steuergerät
- 11: Speichereinheit
- 12: Recheneinheit

- APP: Anwendung
- APP1-: Fahrassistenzfunktionen
- APP1.1-: Antiblockiersystem
- APP1.2--: Elektronisches Stabilitätsprogramm
- APP1.3--: Abstandsregeltempomat
- APP1.4--: Notbremsassistent
- APP1.5--: Spurhalteassistent
- APP1.6--: Spurwechselassistent
- APP1.7--: Nachtsichtassistent
- APP2-: Fahrmodi
- APP3-: Auswertung von Sensordaten
- APP4-: Fusion von Sensordaten
- APP5-: Berechnung von Fahrmanövern
- APP6-: hochautomatisiertes und/oder autonomes Fahren
- APP7-: Navigation
- APP8-: Informationsdienste
- APP9-: Entertainment
- APP10-: Streaming
- APP11-: Updates
- APP12-: On-Board-Diagnostik
- APP13-: Telematik
- APP14-: Voice-Control
- APP15-: Gestenerkennung
- APP16: Klimatisierung

- ECC: Edge-Cloud-Computer
- CC: Cloud-Computer
- Prio: Priorisierung

- R1: externe Rechenleistung
- R2: interne Rechenleistung

## Patentansprüche

1. Verfahren zum Betreiben eines Fahrzeuges (1) beim Auslagern von Rechenleistung aus dem Fahrzeug (1) an mindestens einen Edge-Cloud-Computer, ECC, um bei Verbindungsunterbrechungen zu dem mindestens einen Edge-Cloud-Computer, ECC, unerwartete Abbrüche von ausführbaren Anwendungen, APP, zu vermeiden, wobei der Edge-Cloud-Computer, ECC, dazu ausgeführt ist, eine externe Rechenleistung (R1) für extern ausführbare Anwendungen, APP, bereitzustellen, und wobei das Fahrzeug (1) mindestens ein Steuergerät (10) aufweist, welches dazu ausgeführt ist, eine interne Rechenleistung (R2) für intern ausführbare Anwendungen, APP, bereitzustellen, **dadurch gekennzeichnet, dass** das Verfahren die folgenden Schritte umfasst:
1) Erfassen von extern ausführbaren Anwendungen, APP,
2) Erfassen von intern ausführbaren Anwendungen, APP,
3) Zuordnen einer Priorisierung, Prio, jeder Anwendung, APP, von den extern ausführbaren Anwendungen, APP, und intern ausführbaren Anwendungen, APP,
4) Zuordnen zumindest eines Teils der internen Rechenleistung (R2) auf dem mindestens einen Steuergerät (10) für die extern ausführbaren Anwendungen, APP, und intern ausführbaren Anwendungen, APP, in Abhängigkeit von deren Priorisierung, Prio,
wobei im Schritt 4) die extern ausführbaren Anwendungen, APP, die bei Verbindungsunterbrechungen zu dem mindestens einen Edge-Cloud-Computer, ECC, plötzlich wegfallen, durch äquivalente und/oder alternative ausführbare Anwendungen, APP, auf dem mindestens einen Steuergerät (10) ersetzt werden.

2. Verfahren nach Anspruch 1,
**dadurch gekennzeichnet,**
**dass** die extern ausführbaren Anwendungen, APP, und intern ausführbaren Anwendungen, APP, mindestens eine der folgenden Anwendungen, APP, umfassen:
APP1- Fahrassistenzfunktionen,
APP2- Fahrmodi gemäß einem von möglichen Automatisierungsgraden beim Betreiben des Fahrzeuges (1),
APP3- Auswertung von Sensordaten,
APP4- Fusion von Sensordaten,
APP5- Berechnung von Fahrmanövern,
APP6- hochautomatisiertes und/oder autonomes Fahren,
APP7- Navigation,
APP8- Informationsdienste,
APP9- Entertainment,
APP10- Streaming,
APP11- Updates,
APP12- On-Board-Diagnostik,
APP13- Telematik,
APP14- Voice-Control,
APP15- Gestenerkennung,
APP16 Klimatisierung.

3. Verfahren nach Anspruch 2,
**dadurch gekennzeichnet,**
**dass** die Fahrassistenzfunktionen, APP1, mindestens eine der folgenden Anwendungen, APP, umfassen:
APP1.1- Antiblockiersystem, ABS,
APP1.2-- Elektronisches Stabilitätsprogramm, ESP,
APP1.3-- Abstandsregeltempomat, ACC,
APP1.4-- Notbremsassistent,
APP1.5-- Spurhalteassistent,
APP1.6-- Spurwechselassistent,
APP1.7-- Nachtsichtassistent.

4. Verfahren nach einem der vorhergehenden Ansprüche,
**dadurch gekennzeichnet,**
**dass** die extern ausführbaren Anwendungen, APP, und intern ausführbaren Anwendungen, APP, eine hohe Priorisierung, Prio, erhalten, die für die Sicherheit des Fahrzeuges (1) relevant sind,
und/oder dass die extern ausführbaren Anwendungen, APP, und intern ausführbaren Anwendungen, APP, eine mittlere Priorisierung, Prio, erhalten, die für die Weiterfahrt des Fahrzeuges (1) relevant sind,
und/oder dass die extern ausführbaren Anwendungen, APP, und intern ausführbaren Anwendungen, APP, eine geringe Priorisierung, Prio, erhalten, die dem Wohlbefinden und/oder Komfort eines Benutzers dienen.

5. Verfahren nach Anspruch 2 oder 3,
**dadurch gekennzeichnet,**
**dass** die Anwendungen, APP, eine Priorisierung, Prio, in der Reihenfolge von APP1 bis APP16 und/oder die Fahrassistenzfunktionen APP1 eine Priorisierung, Prio, in der Reihenfolge von APP1.1 bis APP1.7 erhalten.

6. Verfahren nach einem der vorhergehenden Ansprüche,
**dadurch gekennzeichnet,**
**dass** Schritt 4) ferner umfasst:
- Ausgleichen von Datenverluste durch Prädiktion und/oder Schätzung.

7. Verfahren nach einem der vorhergehenden Ansprüche,
**dadurch gekennzeichnet,**
**dass** im Falle einer Verbindungsunterbrechung zu dem mindestens einen Edge-Cloud-Computer, ECC, einem Benutzer des Fahrzeuges (1) angeboten wird, die extern ausführbaren Anwendungen, APP, die bei der Verbindungsunterbrechung wegfallen und die durch den Benutzer manuell ausgeführt werden können, zu übernehmen.

8. Verfahren nach einem der vorhergehenden Ansprüche,
**dadurch gekennzeichnet,**
**dass** im Schritt 4) die interne Rechenleistung (R2) auf dem mindestens einem Steuergerät (10) für die extern ausführbaren Anwendungen, APP, und/oder intern ausführbaren Anwendungen, APP, die von dem Benutzer nicht übernommen werden und/oder nicht übernommen werden können, der Priorisierung, Prio, nach zugeordnet wird, solange die interne Rechenleistung (R2) ausreicht.

9. Verfahren nach einem der vorhergehenden Ansprüche,
**dadurch gekennzeichnet,**
**dass** im Falle einer Verbindungsunterbrechung ein Notfall-Szenario ausgeführt wird, wenn eine Weiterfahrt mit dem Fahrzeug (1) nicht möglich ist,
und/oder dass das Notfall-Szenario mindestens eine der folgenden Maßnahmen umfasst:
- Reduzieren einer Geschwindigkeit des Fahrzeuges (1),
- Ausscheren,
- Halten,
- Signalisierung eines Notfalls.

10. Verfahren nach einem der vorhergehenden Ansprüche,
**dadurch gekennzeichnet,**
**dass** die Verfahrensschritte 1) bis 4) prädiktiv und/oder zyklisch während des Normalbetriebs des Fahrzeuges (1) ausgeführt werden, bei dem ein Auslagern von Rechenleistung aus dem Fahrzeug (1) an mindestens einen Edge-Cloud-Computer, ECC, möglich ist.

11. Steuergerät (10) für ein Fahrzeug (1) zum Ausgleichen von Verbindungsunterbrechungen beim Auslagern von Rechenleistung aus dem Fahrzeug (1) an mindestens einen Edge-Cloud-Computer, ECC,
wobei der Edge-Cloud-Computer, ECC, dazu ausgeführt ist, eine externe Rechenleistung (R1) für extern ausführbare Anwendungen, APP, bereitzustellen, wobei das Steuergerät (10) dazu ausgeführt ist, eine interne Rechenleistung (R2) für intern ausführbare Anwendungen, APP, bereitzustellen,
und wobei das Steuergerät (10) dazu ausgeführt ist, ein Verfahren nach einem der vorhergehenden Ansprüche 1 bis 10 auszuführen.

12. Steuergerät (10) nach Anspruch 11,
**dadurch gekennzeichnet,**
**dass** das Steuergerät (10) in einer zentralen Steuereinheit des Fahrzeuges (1) implementierbar oder als eine eigenständige Steuereinheit ausgebildet ist.

13. Steuergerät (10) nach einem der vorhergehenden Ansprüche 11 oder 12,
**dadurch gekennzeichnet,**
**dass** das Steuergerät (10) dazu ausgeführt ist, die extern ausführbaren Anwendungen, APP, die bei Verbindungsunterbrechungen zu dem mindestens einen Edge-Cloud-Computer, ECC, plötzlich wegfallen, durch äquivalente und/oder alternative ausführbare Anwendungen, APP, zu ersetzen.

14. Steuergerät (10) nach einem der vorhergehenden Ansprüche 11 bis 13,
**dadurch gekennzeichnet,**
**dass** eine Speichereinheit (11) vorgesehen ist, in der eine dynamische Liste für die Priorisierung, Prio, der extern ausführbaren Anwendungen, APP, und/oder intern ausführbaren Anwendungen, APP, hinterlegt ist.

15. Steuergerät (10) nach dem vorhergehenden Anspruch,
**dadurch gekennzeichnet,**
**dass** eine Recheneinheit (12) vorgesehen ist, die dazu ausgeführt ist, die Liste prädiktiv und/oder zyklisch während des Normalbetriebs des Fahrzeuges (1) zu aktualisieren, bei dem ein Auslagern von Rechenleistung aus dem Fahrzeug (1) an mindestens einen Edge-Cloud-Computer, ECC, möglich ist.

16. Fahrzeug (1) mit mindestens einem Steuergerät (10) nach einem der vorhergehenden Ansprüche 11 bis 15.

17. Fahrzeug (1) nach dem vorhergehenden Anspruch,
**dadurch gekennzeichnet,**
**dass** ein Managementsystem (2) vorgesehen ist, um dem mindestens einen Steuergerät (10) und/oder einem weiteren Steuergerät (10) des Fahrzeuges (1) bestimmte Anwendungen, APP, zuzuordnen,
die für das mindestens eine Steuergerät (10) und/oder das weitere Steuergerät (10) spezifisch sind
oder die durch äquivalent und/oder alternativ ausführbare Anwendungen, APP, auf dem mindestens einen Steuergerät (10) und/oder dem weiteren Steuergerät (10) ersetzt werden können,
und/oder eine Anzeigeeinheit (3) vorgesehen ist, um eine dynamische Liste für die Priorisierung, Prio, der extern ausführbaren Anwendungen, APP, und/oder intern ausführbaren Anwendungen, APP, zu visualisieren und/oder zu bearbeiten.

## Claims

1. Method for operating a vehicle (1) when transferring computing power from the vehicle (1) to at least one edge cloud computer, ECC, in order to avoid unexpected terminations of executable applications, APP, when the connection to the at least one edge cloud computer, ECC, is interrupted, the edge cloud computer, ECC, being configured to provide external computing power (R1) for externally executable applications, APP, and the vehicle (1) having at least one control device (10) which is configured to provide internal computing power (R2) for internally executable applications, APP,
**characterized in that** the method comprises the following steps:
1) detecting externally executable applications, APP,
2) detecting internally executable applications, APP,
3) allocating a prioritization, Prio, to each application, APP, from the externally executable applications, APP, and internally executable applications, APP,
4) allocating at least a portion of the internal computing power (R2) on the at least one control device (10) for the externally executable applications, APP, and internally executable applications, APP, depending on their prioritization, Prio,
wherein, in step 4), the externally executable applications, APP, which suddenly stop working when the connection to the at least one edge cloud computer, ECC, is interrupted, are replaced by equivalent and/or alternative executable applications, APP, on the at least one control device (10).

2. Method according to claim 1,
**characterized in that**
the externally executable applications, APP, and internally executable applications, APP, comprise at least one of the following applications, APP:
APP1- driver assistance functions,
APP2- driving modes according to any of the possible degrees of automation during operation of the vehicle (1),
APP3- evaluation of sensor data,
APP4- fusion of sensor data,
APP5- calculation of driving maneuvers,
APP6- highly automated and/or autonomous driving,
APP7- navigation,
APP8- information services,
APP9- entertainment,
APP10- streaming,
APP11- updates,
APP12- on-board diagnostics,
APP13- telematics,
APP14- voice control,
APP15- gesture recognition,
APP16 air conditioning.

3. Method according to claim 2,
**characterized in that**
the driver assistance functions, APP1, comprise at least one of the following applications, APP:
APP1.1- anti-lock braking system, ABS,
APP1.2-- electronic stability program, ESP,
APP1.3-- adaptive cruise control, ACC,
APP1.4-- emergency braking assistant,
APP1.5-- lane keeping assistant,
APP1.6-- lane change assistant,
APP1.7-- night vision assistant.

4. Method according to any of the preceding claims,
**characterized in that**
the externally executable applications, APP, and internally executable applications, APP, that are relevant to the safety of the vehicle (1) are given a high prioritization, Prio,
and/or **in that** the externally executable applications, APP, and internally executable applications, APP, that are relevant for the further travel of the vehicle (1) are given a medium prioritization, Prio,
and/or **in that** the externally executable applications, APP, and internally executable applications, APP, that serve the well-being and/or comfort of a user are given a low prioritization, Prio.

5. Method according to claim 2 or 3,
**characterized in that**
the applications, APP, receive a prioritization, Prio, in the order of APP1 to APP16 and/or the driver assistance functions APP1 receive a prioritization, Prio, in the order of APP1.1 to APP1.7.

6. Method according to any of the preceding claims,
**characterized in that**
step 4) further comprises:
- compensating for data loss through prediction and/or estimation.

7. Method according to any of the preceding claims,
**characterized in that**
if the connection to the at least one edge cloud computer, ECC, is interrupted, a user of the vehicle (1) is offered the opportunity to take over the externally executable applications, APP, which stop working when the connection is interrupted and which can be executed manually by the user.

8. Method according to any of the preceding claims,
**characterized in that**
in step 4), the internal computing power (R2) on the at least one control device (10) is allocated according to the prioritization, Prio, for the externally executable applications, APP, and/or internally executable applications, APP, which are not taken over and/or cannot be taken over by the user, as long as the internal computing power (R2) is sufficient.

9. Method according to any of the preceding claims,
**characterized in that**
if the connection is interrupted, an emergency scenario is executed if further travel using the vehicle (1) is not possible, and/or **in that** the emergency scenario comprises at least one of the following measures:
- reducing a speed of the vehicle (1),
- pulling over,
- stopping,
- signaling an emergency.

10. Method according to any of the preceding claims,
**characterized in that**
method steps 1) to 4) are executed predictively and/or cyclically during normal operation of the vehicle (1), during which a transfer of computing power from the vehicle (1) to at least one edge cloud computer, ECC, is possible.

11. Control device (10) for a vehicle (1) for compensating for connection interruptions when transferring computing power from the vehicle (1) to at least one edge cloud computer, ECC, wherein the edge cloud computer, ECC, is configured to provide external computing power (R1) for externally executable applications, APP, wherein the control device (10) is configured to provide internal computing power (R2) for internally executable applications, APP, and wherein the control device (10) is configured to execute a method according to any of the preceding claims 1 to 10.

12. Control device (10) according to claim 11,
**characterized in that**
the control device (10) can be implemented in a central control unit of the vehicle (1) or is designed as a standalone control unit.

13. Control device (10) according to either of the preceding claims 11 or 12,
**characterized in that**
the control device (10) is configured to replace the externally executable applications, APP, which suddenly stop working when the connection to the at least one edge cloud computer, ECC, is interrupted, with equivalent and/or alternative executable applications, APP.

14. Control device (10) according to any of the preceding claims 11 to 13,
**characterized in that**
a storage unit (11) is provided, in which a dynamic list for the prioritization, Prio, of the externally executable applications, APP, and/or internally executable applications, APP, is stored.

15. Control device (10) according to the preceding claim,
**characterized in that**
a computing unit (12) is provided, which is configured to update the list predictively and/or cyclically during normal operation of the vehicle (1), during which a transfer of computing power from the vehicle (1) to at least one edge cloud computer, ECC, is possible.

16. Vehicle (1) having at least one control device (10) according to any of the preceding claims 11 to 15.

17. Vehicle (1) according to the preceding claim,
**characterized in that**
a management system (2) is provided to allocate specific applications, APP, to the at least one control device (10) and/or another control device (10) of the vehicle (1),
which applications are specific to the at least one control device (10) and/or the other control device (10)
or can be replaced by equivalently and/or alternatively executable applications, APP, on the at least one control device (10) and/or the other control device (10),
and/or a display unit (3) is provided to visualize and/or edit a dynamic list for the prioritization, Prio, of the externally executable applications, APP, and/or internally executable applications, APP.

## Revendications

1. Procédé permettant de faire fonctionner un véhicule (1) consistant à délocaliser une puissance de calcul du véhicule (1) vers au moins un ordinateur en nuage et en périphérie, ECC, afin d'éviter, en cas d'interruption de connexion avec l'au moins un ordinateur en nuage et en périphérie, ECC, des arrêts inattendus d'applications, APP, exécutables, dans lequel l'ordinateur en nuage et en périphérie, ECC, est configuré pour fournir une puissance de calcul externe (R1) à des applications, APP, exécutables en externe, et dans lequel le véhicule (1) présente au moins un appareil de commande (10) configuré pour fournir une puissance de calcul interne (R2) à des applications, APP, exécutables en interne,
**caractérisé en ce que** le procédé comprend les étapes suivantes :
1) détection d'applications, APP, exécutables en externe,
2) détection d'applications, APP, exécutables en interne,
3) attribution d'une hiérarchisation, Prio, à chaque application, APP, parmi les applications, APP, exécutables en externe et les applications, APP, exécutables en interne,
4) attribution d'au moins une partie de la puissance de calcul interne (R2) de l'au moins un appareil de commande (10) aux applications, APP, exécutables en externe et aux applications, APP, exécutables en interne en fonction de leur hiérarchisation, Prio,
dans lequel, à l'étape 4), les applications, APP, exécutables en externe qui disparaissent soudainement en cas d'interruption de connexion avec l'au moins un ordinateur en nuage et en périphérie, ECC, sont remplacées par des applications, APP, exécutables équivalentes et/ou alternatives sur l'au moins un appareil de commande (10).

2. Procédé selon la revendication 1,
**caractérisé en ce**
**que** les applications, APP, exécutables en externe et les applications, APP, exécutables en interne comprennent au moins l'une des applications, APP, suivantes :
APP1- fonctions d'aide à la conduite,
APP2- modes de conduite selon l'un des degrés d'automatisation possibles lors du fonctionnement du véhicule (1),
APP3- évaluation de données de capteur,
APP4- fusion de données de capteur,
APP5- calcul de manœuvres de conduite,
APP6- conduite hautement automatisée et/ou autonome,
APP7- navigation,
APP8- services d'informations,
APP9- divertissement,
APP10- diffusion en continu,
APP11- mises à jour,
APP12- diagnostic embarqué,
APP13- télématique,
APP14- commande vocale,
APP15- reconnaissance des gestes,
APP16 climatisation.

3. Procédé selon la revendication 2,
**caractérisé en ce**
**que** les fonctions d'aide à la conduite, APP1, comprennent au moins l'une des applications, APP, suivantes :
APP1.1- antiblocage de sécurité, ABS,
APP1.2-- électro-stabilisateur programmé, ESP,
APP1.3-- régulateur de vitesse et d'espacement, RVE,
APP1.4-- assistance au freinage d'urgence,
APP1.5-- alerte de franchissement de ligne,
APP1.6-- assistance de changement de voie,
APP1.7-- assistance de vision nocturne.

4. Procédé selon l'une des revendications précédentes,
**caractérisé en ce**
**que** les applications, APP, exécutables en externe et les applications, APP, exécutables en interne pertinentes pour la sécurité du véhicule (1) obtiennent une hiérarchisation, Prio, élevée,
**et/ou que** les applications, APP, exécutables en externe et les applications, APP, exécutables en interne pertinentes pour la poursuite du trajet du véhicule (1) obtiennent une hiérarchisation, Prio, moyenne,
**et/ou que** les applications, APP, exécutables en externe et les applications, APP, exécutables en interne servant au bien-être et/ou au confort d'un utilisateur obtiennent une hiérarchisation, Prio, faible.

5. Procédé selon la revendication 2 ou 3,
**caractérisé en ce**
**que** les applications, APP, obtiennent une hiérarchisation, Prio, dans l'ordre allant de APP1 à APP16 et/ou les fonctions d'aide à la conduite, APP1, obtiennent une hiérarchisation, Prio, dans l'ordre allant de APP1.1 à APP1.7.

6. Procédé selon l'une des revendications précédentes,
**caractérisé en ce**
**que** l'étape 4) comprend en outre :
- la compensation de pertes de données par prédiction et/ou estimation.

7. Procédé selon l'une des revendications précédentes,
**caractérisé en ce**
**que**, dans le cas d'une interruption de connexion à l'au moins un ordinateur en nuage et en périphérie, ECC, un utilisateur du véhicule (1) est invité à prendre en charge les applications, APP, exécutables en externe qui disparaissent lors de l'interruption de connexion et qui peuvent être exécutées manuellement par l'utilisateur.

8. Procédé selon l'une des revendications précédentes,
**caractérisé en ce**
**que**, à l'étape 4), la puissance de calcul interne (R2) sur l'au moins un appareil de commande (10) est attribuée, pour les applications, APP, exécutables en externe et/ou les applications, APP, exécutables en interne qui ne sont pas et/ou ne peuvent pas être prises en charge par l'utilisateur, selon la hiérarchisation, Prio, tant que la puissance de calcul interne (R2) est suffisante.

9. Procédé selon l'une des revendications précédentes,
**caractérisé en ce**
**que**, dans le cas d'une interruption de connexion, un scénario d'urgence est exécuté lorsqu'une poursuite du trajet n'est pas possible avec le véhicule (1), **et/ou que** le scénario d'urgence comprend au moins l'une des mesures suivantes :
- réduction d'une vitesse du véhicule (1),
- déboîtement,
- arrêt,
- signalisation d'une urgence.

10. Procédé selon l'une des revendications précédentes,
**caractérisé en ce**
**que** les étapes de procédé 1) à 4) sont exécutées de manière prédictive et/ou cyclique pendant le fonctionnement normal du véhicule (1), dans lequel une délocalisation d'une puissance de calcul du véhicule (1) vers au moins un ordinateur en nuage et en périphérie, ECC, est possible.

11. Appareil de commande (10) pour un véhicule (1) permettant de compenser des interruptions de connexion lors d'une délocalisation de puissance de calcul du véhicule (1) vers au moins un ordinateur en nuage et en périphérie, ECC, dans lequel l'ordinateur en nuage et en périphérie, ECC, est configuré pour fournir une puissance de calcul externe (R1) à des applications, APP, exécutables en externe, dans lequel l'appareil de commande (10) est configuré pour fournir une puissance de calcul interne (R2) à des applications, APP, exécutables en interne, et dans lequel l'appareil de commande (10) est configuré pour exécuter un procédé selon l'une des revendications précédentes 1 à 10.

12. Appareil de commande (10) selon la revendication 11,
**caractérisé en ce**
**que** l'appareil de commande (10) peut être implanté dans une unité de commande centrale du véhicule (1) ou est réalisé sous forme d'unité de commande autonome.

13. Appareil de commande (10) selon l'une des revendications précédentes 11 ou 12,
**caractérisé en ce**
**que** l'appareil de commande (10) est configuré pour remplacer les applications, APP, exécutables en externe qui disparaissent soudainement en cas d'interruption de connexion avec l'au moins un ordinateur en nuage et en périphérie, ECC, par des applications, APP, exécutables équivalentes et/ou alternatives.

14. Appareil de commande (10) selon l'une des revendications précédentes 11 à 13,
**caractérisé en ce**
**qu'**une unité de stockage (11) est prévue, dans laquelle est enregistrée une liste dynamique pour la hiérarchisation, Prio, des applications, APP, exécutables en externe et/ou des applications, APP, exécutables en interne.

15. Appareil de commande (10) selon la revendication précédente,
**caractérisé en ce**
**qu'**une unité de calcul (12) est prévue, laquelle est configurée pour actualiser la liste de manière prédictive et/ou cyclique pendant le fonctionnement normal du véhicule (1), dans lequel une délocalisation d'une puissance de calcul du véhicule (1) vers au moins un ordinateur en nuage et en périphérie, ECC, est possible.

16. Véhicule (1) comportant au moins un appareil de commande (10) selon l'une des revendications précédentes 11 à 15.

17. Véhicule (1) selon la revendication précédente,
**caractérisé en ce**
**qu'**un système de gestion (2) est prévu pour attribuer certaines applications, APP, à l'au moins un appareil de commande (10) et/ou à un autre appareil de commande (10) du véhicule (1),
lesquelles applications sont spécifiques à l'au moins un appareil de commande (10) et/ou à l'autre appareil de commande (10)
ou peuvent être remplacées par des applications, APP, exécutables équivalentes et/ou alternatives sur l'au moins un appareil de commande (10) et/ou sur l'autre appareil de commande (10),
et/ou une unité d'affichage (3) est prévue pour visualiser et/ou traiter une liste dynamique de hiérarchisation, Prio, des applications, APP, exécutables en externe et/ou des applications, APP, exécutables en interne.
